# EUROPEAN PATENT APPLICATION

(11) **EP 4 475 329 A1**
(43) Date of publication of application: **11.12.2024**
(21) Application number: 23843277.7
(22) Date of filing: 13.07.2023
(51) Int. Cl.: H01M 50/547, H01M 50/553, H01M 50/209, H01M 50/502, H01M 50/342, H01M 50/249, H01M 50/148, H01M 10/6556, H01M 10/613

(54) **CELL ASSEMBLY, AND BATTERY PACK AND VEHICLE INCLUDING SAME**

(30) Priority: 20.07.2022 KR 20220089939; 23.05.2023 KR 20230066589
(71) Applicant: LG Energy Solution, Ltd., Seoul 07335 (KR)
(72) Inventor: PARK, Jin-Yong, Daejeon 34122 (KR); KWON, Woo-Yong, Daejeon 34122 (KR); LEE, Myung-Woo, Daejeon 34122 (KR); KIM, Seung-Joon, Daejeon 34122 (KR); KIM, In-Soo, Daejeon 34122 (KR); CHUNG, Se-Yun, Daejeon 34122 (KR); CHI, Ho-June, Daejeon 34122 (KR)
(74) Representative: Plasseraud IP
(86) International application number: PCT/KR2023/010054
(87) International publication number: WO 2024/019427

(57) **Abstract**

A cell assembly according to the present disclosure includes one pouch-type battery cell or two or more pouch-type battery cells which are stacked, a cell cover partially surrounding an outer surface of the pouch-type battery cell, a bus bar assembly including a terminal bus bar electrically connected to an electrode lead of each of the pouch-type battery cell, and a terminal extender electrically connected to the terminal bus bar, extending to a position spaced apart from the terminal bus bar by a certain distance, and detachably provided on an outer surface of the cell cover.

## Description

### TECHNICAL FIELD

The present disclosure relates to a cell assembly, and a battery pack and a vehicle including the same, and more particularly, to a cell assembly including a cell cover and a pouch-type battery cell while omitting the assembly of a general battery module unit, and a battery pack and a vehicle including the cell assembly.

The present application claims priority to Korean Patent Application Nos. 10-2022-0089939 filed on July 20, 2022 in the Republic of Korea and 10-2023-0066589 filed on May 23, 2023 in the Republic of Korea, the disclosures of which are incorporated herein by reference.

### BACKGROUND ART

As the development and demand for mobile devices has increased, the demand for secondary batteries as energy sources has rapidly increased. Nickel cadmium batteries or hydrogen ion batteries have been used as conventional secondary batteries, but recently, lithium secondary batteries having little memory effect compared to nickel-based secondary batteries, free charging and discharging, a very low self-discharge rate, and high energy density have been widely used.

A lithium secondary battery mainly uses a lithium-based oxide and a carbon material as a positive electrode active material and a negative electrode active material, respectively. A lithium secondary battery includes an electrode assembly in which a positive electrode plate and a negative electrode plate coated with a positive electrode active material and a negative electrode active material are located with a separator therebetween, and a casing in which the electrode assembly is air-tightly accommodated together with an electrolyte, that is, a battery case.

In general, according to a shape of a casing, secondary batteries may be classified into can-type batteries in which an electrode assembly is received in a metal can, and pouch-type batteries in which an electrode assembly is received in a pouch of an aluminum laminate sheet.

Pouch-type secondary batteries have various advantages such as a light weight and a high energy density relative to a volume due to a small dead space when stacked. However, pouch-type batteries are relatively vulnerable to external impact and have somewhat poor assemblability.

In a conventional general battery pack, a plurality of pouch-type secondary batteries are accommodated in a module case to form a battery module, and one or more battery modules are accommodated in a pack case to form a battery pack. As an example of the battery module, as disclosed in Prior Document (Korean Patent Application Publication No. 10-2015-0044599), a conventional battery module includes a stacking frame formed of a plastic material also as a cartridge, plates at both ends in a cell stacking direction, a cell stack in which a plurality of pouch-type secondary batteries are held and stacked by using various components including a fastening member such as a bolt, and a module case in which the cell stack may be accommodated. In this case, the pouch-type secondary batteries may be protected from external impact, and the movement of the pouch-type secondary batteries may be suppressed, thereby ensuring electrical reliability.

However, when pouch-type secondary batteries are assembled in a battery module unit and mounted in a battery pack as described above, it may be disadvantageous in terms of energy density. In particular, because the battery module includes various components such as a module case and a stacking frame as well as the pouch-type secondary batteries, the weight and volume of the battery pack may unnecessarily increase. Accordingly, there has recently been high interest in a cell-to-pack type battery pack in which a battery module manufacturing process is omitted and a plurality of pouch-type secondary batteries are directly mounted on a pack case.

However, pouch-type secondary batteries with a soft pouch case are not easy to fix and may be damaged while being mounted on a pack case. Also, there is a high risk that durability against external impact will be reduced. Also, in a pouch-type secondary battery, electrode leads are located in one direction with respect to its body or a positive electrode lead and a negative electrode lead are located in opposite directions. That is, because directions of electrode leads of a pouch-type secondary battery are limited, it is not easy to mount pouch-type secondary batteries on a pack case and then electrically ensure that the pouch-type secondary batteries have a desired capacity and output power.

### DISCLOSURE

### Technical Problem

The present disclosure is designed to solve the problems of the related art, and therefore the present disclosure is directed to providing a cell assembly in which a battery cell may be stably and space-efficiently mounted on a pack case and a terminal connection position or direction may be changed when necessary.

Also, the present disclosure is directed to providing a battery pack in which assembly may be simplified and energy density may be increased by using the cell assembly.

However, technical problems to be solved by the present disclosure are not limited to the above-described technical problems and one of ordinary skill in the art will understand other technical problems from the following description.

### Technical Solution

In one aspect of the present disclosure, there is provided a cell assembly including one pouch-type battery cell or two or more pouch-type battery cells which are stacked, a cell cover partially surrounding an outer surface of the pouch-type battery cell, a bus bar assembly including a terminal bus bar electrically connected to an electrode lead of each of the pouch-type battery cell, and a terminal extender electrically connected to the terminal bus bar, extending to a position spaced apart from the terminal bus bar by a certain distance, and detachably provided on an outer surface of the cell cover.

The terminal extender may include a current conducting member formed of an electrically conductive material, and including a terminal connection portion contacting the terminal bus bar and an extension terminal portion provided at a position spaced apart from the terminal connection portion by a certain distance, and an extension housing formed of an electrically insulating material, surrounding the current conducting member so that the current conducting member does not contact the cell cover, and detachably provided on the outer surface of the cell cover.

The extension housing may include a mounting portion through which one surface of the terminal connection portion facing the terminal bus bar is exposed to outside, an extension portion having a hollow structure and extending from the mounting portion by a pre-determined length, and a terminal exposure portion through which the extension terminal portion is exposed to outside.

The mounting portion, the terminal connection portion, and the terminal bus bar may be integrally fixed to each other by a fastening member.

The bus bar assembly may include a first bus bar assembly and a second bus bar assembly respectively located at one end and the other end of the cell cover along a longitudinal direction, and the terminal extender may include a first terminal extender connected to the first bus bar assembly and a second terminal extender connected to the second bus bar assembly.

Each of the first terminal extender and the second terminal extender may extend to an upper central portion of the cell cover.

The cell cover may be configured to surround the pouch-type battery cell so that an upper edge portion or a lower edge portion of the surrounded pouch-type battery cell is exposed.

The cell cover may include an upper cover portion covering an upper edge portion of the pouch-type battery cell, a first side cover portion extending downward from one edge of the upper cover portion along a width direction and covering one side surface of the pouch-type battery cell, and a second side cover portion extending downward from the other edge of the upper cover portion along the width direction and covering the other side surface of the pouch-type battery cell.

The bus bar assembly may include a first bus bar assembly and a second bus bar assembly respectively located at one end and the other end of the cell cover in a longitudinal direction, and the terminal extender may be detachably provided on the upper cover portion, and may include a first terminal extender connected to the first bus bar assembly and a second terminal extender connected to the second bus bar assembly, wherein the upper cover portion may include a venting portion located in an area where the first terminal extender and the second terminal extender are not mounted and opened by pressure.

The venting portion may be provided by linearly cutting or notching the upper cover portion.

In another aspect of the present disclosure, there is provided a battery pack including a cell assembly group in which cell assemblies are stacked in one direction, and a pack case including a pack tray on which the cell assembly group is seated and a pack cover covering the cell assembly group.

The cell assembly group may be adhered and fixed to the pack tray.

The pack tray may include a cooling channel in which a cooling medium may flow.

The pack tray may include a fixing groove into which a lower end of the cell cover is inserted and fixed.

In another aspect of the present disclosure, there is provided a vehicle including the battery pack.

### Advantageous Effects

According to one aspect of the present disclosure, there may be provided a cell assembly in which a battery cell may be stably and space-efficiently mounted on a pack case and a terminal connection position or direction may be easily changed when necessary.

According to another aspect of the present disclosure, there may be provided a battery pack in which an assembly process of the battery pack may be simplified and energy density may be improved, by assembling the battery pack by using the cell assembly.

The present disclosure may have various other effects, which will be described in each embodiment, or descriptions of effects that may be easily inferred by one of ordinary skill in the art will be omitted.

### DESCRIPTION OF DRAWINGS

FIG. 1 is a schematic perspective view illustrating a cell assembly according to an embodiment of the present disclosure.
FIG. 2 is a view illustrating a state where a terminal extender is removed from the cell assembly of FIG. 1.
FIG. 3 is an exploded perspective view illustrating the cell assembly of FIG. 1.
FIG. 4 is a partial enlarged view of FIG. 3.
FIG. 5 is a perspective view illustrating a terminal bus bar of FIG. 4.
FIG. 6 is a view schematically illustrating a structure in which a pouch-type battery cell and a terminal bus bar are arranged according to an embodiment of the present disclosure.
FIG. 7 is a perspective view illustrating a current conducting member according to an embodiment of the present disclosure.
FIG. 8 is a perspective view illustrating an extension housing including a terminal exposure portion that is partially cut according to an embodiment of the present disclosure.
FIG. 9 is a view illustrating a portion of a terminal extender according to an embodiment of the present disclosure.
FIG. 10 is a cross-sectional view illustrating a portion taken along line A-A' of FIG. 1.
FIG. 11 is a schematic perspective view illustrating a cell assembly according to another embodiment of the present disclosure.
FIG. 12 is a view illustrating an example where a venting portion in the cell assembly of FIG. 11 is opened.
FIG. 13 is a view schematically illustrating a cell assembly group according to an embodiment of the present disclosure.
FIG. 14 is a partial enlarged view of FIG. 13.
FIG. 15 is a view schematically illustrating a configuration of a battery pack according to an embodiment of the present disclosure.
FIG. 16 is a partial cross-sectional view illustrating the battery pack according to an embodiment of the present disclosure.
FIG. 17 is a view schematically illustrating a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

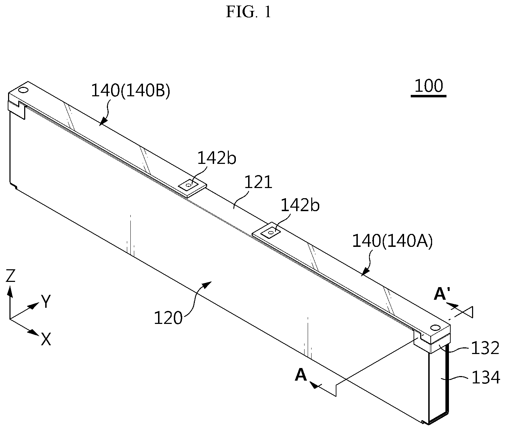

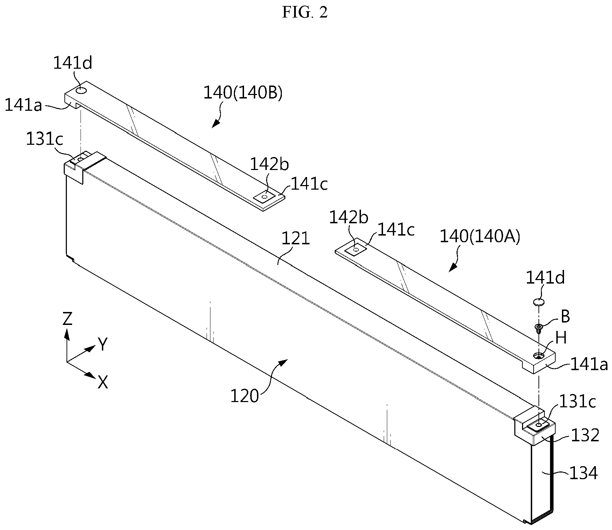

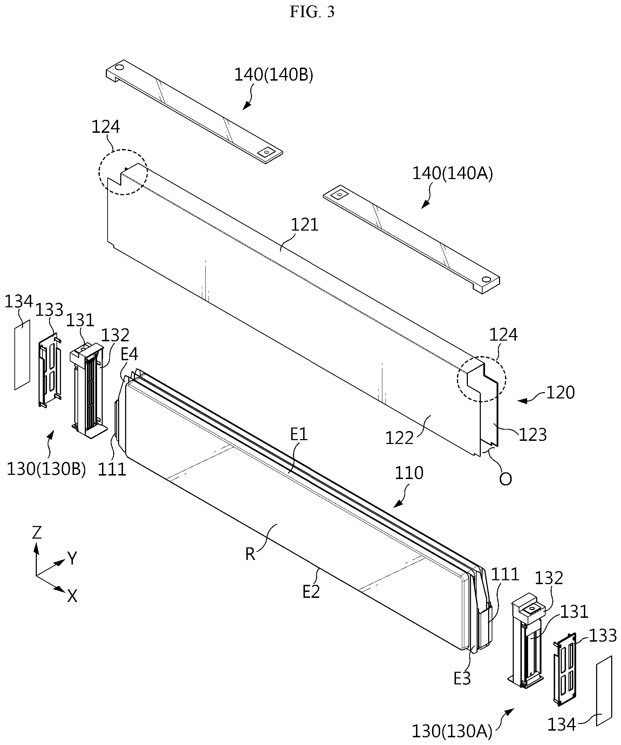

FIG. 1 is a schematic perspective view illustrating a cell assembly according to an embodiment of the present disclosure. FIG. 2 is a view illustrating a state where a terminal extender is removed from the cell assembly of FIG. 1. FIG. 3 is an exploded perspective view illustrating the cell assembly of FIG. 1.

Referring to FIGS. 1 to 3, a cell assembly 100 according to an embodiment of the present disclosure includes a pouch-type battery cell 110, a cell cover 120, a bus bar assembly 130, and a terminal extender 140.

The pouch-type battery cell 110 may be manufactured by accommodating an electrode assembly and an electrolyte material in a pouch casing formed of a laminate film including a soft metal and sealing the pouch casing. The electrode assembly includes a positive electrode plate and a negative electrode plate, and a separator located between the positive electrode plate and the negative electrode plate.

The pouch-type battery cell 110 includes an electrode lead 111 functioning as an electrode terminal, and the electrode lead 111 may be electrically connected to the electrode assembly and exposed to the outside of the pouch casing. The electrode lead 111 includes a positive electrode lead and a negative electrode lead as a pair. The positive electrode lead and the negative electrode lead may be provided at both front and rear ends of the pouch-type battery cell 110 in a longitudinal direction (X direction) of the pouch-type battery cell 110.

The pouch-type battery cell 110 includes a receiving portion R in which the electrode assembly is accommodated and four edge portions (e.g., E1 to E4) surrounding the receiving portion R. In the pouch-type battery cell 110 that is erected as shown in FIG. 3, the four edge portions (e.g., E1 to E4) include, for example, an upper edge portion E1, a lower edge portion E2, a front edge portion E3, and a rear edge portion E4 with respect to the receiving portion R.

All of the edge portions (e.g., E1 to E4) may be sealed portions, or the remaining three edge portions (e.g., E2, E3, E4 or E1, E3, E4) excluding the upper edge portion E1 or the lower edge portion E2 may be sealed portions. In other words, when the electrode assembly is accommodated, the pouch-type battery cell 110 using a method of folding one laminate film includes three sealed portions, and the pouch-type battery cell 110 using a method of adhering edges of two laminate films includes four sealed portions. Accordingly, in the pouch-type battery cell 110, three edge portions (e.g., E2, E3, E4 or E1, E3, E4) may be sealed portions, or all of the four edge portions (e.g., E1 to E4) may be sealed portions.

The cell cover 120 may be configured to surround one pouch-type battery cell 110 or two or more pouch-type battery cells 110 which are stacked. For example, the cell cover 120 configured to surround one pouch-type battery cell 110 may be manufactured to surround the upper edge portion E1 and both surfaces of the receiving portion R of the pouch-type battery cell 110, and the cell cover 120 configured to surround three pouch-type battery cells 110 which are stacked as shown in an embodiment of FIG. 3 may be manufactured to surround the upper edge portions E1 of the tree pouch-type battery cells 110, one surface of the receiving portion R of a first pouch-type battery cell in an stacking order and one surface of the receiving portion R of a third pouch-type battery cell 110 in the stacking order.

The cell cover 120 may be formed of any of various materials to ensure rigidity. In particular, the cell cover 120 may be formed of a metal material. When the cell cover 120 is formed of a metal material, a stacked state of the pouch-type battery cells 110 may be more stably maintained, and the pouch-type battery cells 110 may be more safely protected from external impact. In particular, the cell cover 120 may be formed of a steel material, especially a stainless steel (SUS) material. For example, the cell cover 120 may be entirely formed of an SUS material.

When the cell cover 120 is used, a stacked state and an erected state of the pouch-type battery cells 110 may be stably maintained. In particular, a casing of the pouch-type battery cell 110 is formed of a soft material, and thus, the pouch-type battery cell 110 may be vulnerable to external impact and may have low hardness. Accordingly, it is not easy to accommodate the pouch-type battery cell 110 itself in a pack case 200. However, as described below in detail, in the present disclosure, because the pouch-type battery cells 110 are accommodated in the cell cover 120, damage or breakage of the pouch-type battery cells 110 may be prevented from external impact, etc., and when the pouch-type battery cells 110 are stacked on the pack case 200, a stacked state of the pouch-type battery cells 110 may be stably maintained. Hence, there is no need to additionally provide a module case, a stacking frame, and a fastening member for maintaining a stacked state, in a battery pack 10. As a result, because more battery cells 110 may be accommodated in the pack case 200, the energy density of the battery pack 10 may be increased.

Mainly referring to FIG. 3, the cell cover 120 according to an embodiment of the present disclosure may include an upper cover portion 121, a first side cover portion 122, and a second side cover portion 123.

The upper cover portion 121 may be configured to surround the upper edge portion E1 of the pouch-type battery cell 110 accommodated therein. The upper cover portion 121 may contact or be spaced apart from the upper edge portion E1 of the pouch-type battery cell 110.

The first side cover portion 122 may extend downward from one edge line of the upper cover portion 121 along a width direction. For example, the first side cover portion 122 may extend longer than the receiving portion R of the pouch-type battery cell 110 downward from a left end of the upper cover portion 121.

The first side cover portion 122 may be configured to cover one side surface of the at least one pouch-type battery cell 110. For example, the first side cover portion 122 may be configured to surround one surface of the receiving portion R of the first pouch-type battery cell 110 in FIG. 3.

The second side cover portion 123 may extend downward from the other edge line of the upper cover portion 121 in the width direction. For example, the second side cover portion 123 may extend longer than the receiving portion R of the pouch-type battery cell 110 downward from a right end of the upper cover portion 121.

The second side cover portion 123 may be configured to cover one side surface of the at least one pouch-type battery cell 110. For example, the second side cover portion 123 may be configured to surround one surface of the receiving portion R of the third pouch-type battery cell 110 in FIG. 3.

An interval between the first side cover portion 122 and the second side cover portion 123 may be determined so that the pouch-type battery cell 110 accommodated in the cell cover 120 may be compressed.

The cell cover 120 may be provided so that a front side, a rear side, and a lower side are open. Also, the cell cover 120 of the present disclosure includes cut portions 124 at both upper ends as shown in FIG. 3. Through the cut portion 124, the bus bar assembly 130 may be further inserted into the cell cover 120, as shown in FIG. 2. In other words, the bus bar housing 132 is pushed into a front open portion O or a rear open portion of the cell cover 120 and an upper end of a terminal bus bar 131 may be exposed upward through the cut portion 124. In this case, the cell assembly 100 may be provided more compactly.

The bus bar assembly 130 includes a first bus bar assembly 130A and a second bus bar assembly 130B. As shown in FIGS. 2 and 3, the first bus bar assembly 130A is located at one end (+X direction) of the cell cover 120 along the longitudinal direction, and the second bus bar assembly 130B is located at the other end (-X direction) of the cell cover 120.

In the present embodiment, positive electrode leads of three pouch-type battery cells 110 which are stacked may be integrally welded to the terminal bus bar 131 of the first bus bar assembly 130A, and negative electrode leads of the three pouch-type battery cells 110 may be integrally welded to the terminal bus bar 131 of the second bus bar assembly 130B. In this case, the three pouch-type battery cells 110 may be connected in parallel in a 3PIS form. The first bus bar assembly 130A and the second bus bar assembly 130B have substantially the same configuration.

The bus bar assembly 130 may include, as main components, the terminal bus bar 131, the bus bar housing 132, a housing cover 133, and an insulating sheet.

The terminal bus bar 131 may be formed of a metal such as copper, nickel, or aluminum, and the bus bar housing 132 may be formed of an electrically insulating material such as plastic.

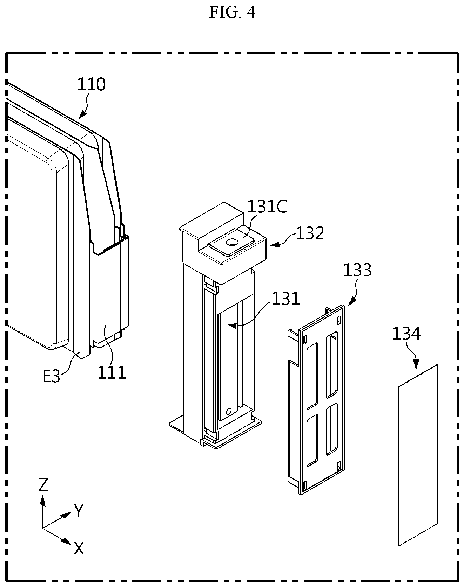

The bus bar housing 132 may support the terminal bus bar 131 and may be coupled to the cell cover 120, as shown in FIGS. 3 and 4. That is, the bus bar housing 132 may be coupled to each of the front open portion and the rear open portion of the cell cover 120. In this case, the bus bar housing 132 may be fixedly coupled to the cell cover 120 through any of various fastening methods such as adhesion, welding, fitting, hook, bolting, or riveting.

The bus bar housing 132 may be provided in a box shape having a substantially rectangular parallelepiped structure. A slit through which the electrode lead 111 may be inserted may be formed in one surface of the bus bar housing 132 facing the receiving portion R of the battery cell 110 and a surface opposite to the one surface may be open. The electrode lead 111 is pulled out through the slit, and a pulled-out portion of the electrode lead 111 is fixed to the terminal bus bar 131. In this case, laser welding may be performed on a contact portion between the electrode lead 111 and the bus bar through the open portion. The open portion of the bus bar housing 132 may be covered by the housing cover 133. The insulating sheet 134 may be further attached to an outer surface of the housing cover 133. The insulating sheet 134 may be formed of a flame retardant material such as mica.

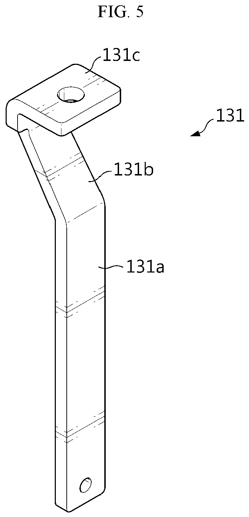

In particular, the terminal bus bar 131 includes, as shown in FIG. 5, for example, a lead attachment portion 131a vertically extending when erected on the ground, a bent portion 131b inclined at a certain angle and obliquely extending from the lead attachment portion 131a, and a bus bar terminal portion 131c horizontally extending from an upper end of the bent portion 131b in a direction opposite to the bent portion 131b.

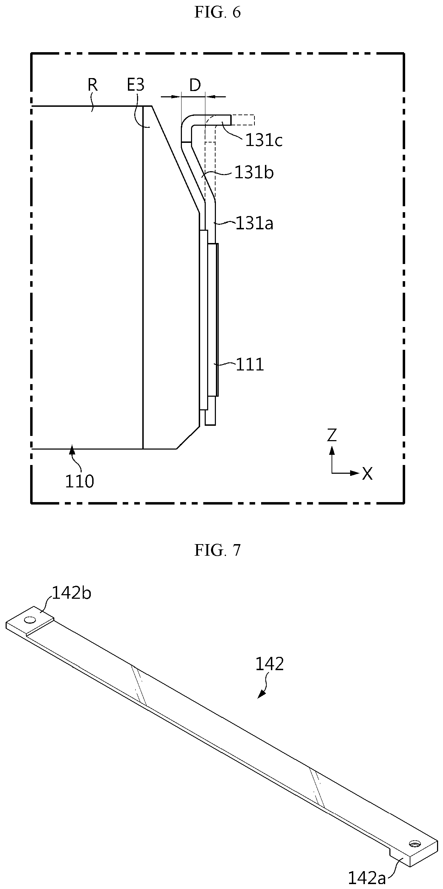

In the terminal bus bar 131, the bus bar terminal portion 131c may be as close as possible to the receiving portion R of the pouch-type battery cell 110. For example, as shown in FIG. 6, because a portion over the lead attachment portion 131a of the terminal bus bar 131 of the present embodiment is inclined toward the receiving portion R, compared to a case where there is no bent portion 131b as marked by a dashed line in FIG. 6, the bus bar terminal portion 131c may be closer to the receiving portion of the pouch-type battery cell 110 by 'D' of FIG. 6.

As shown in FIG. 3, when the terminal bus bar 131 is assembled to the bus bar housing 132 and the housing cover 133 and the insulating sheet 134 are assembled to the bus bar housing 132, as shown in FIG. 6, only the bus bar terminal portion 131c of the terminal bus bar 131 may be exposed to the outside.

Referring back to FIG. 3, as described above, the cell cover 120 includes the cut portions 124 at both upper ends. Accordingly, the bus bar housing 132 and the bus bar terminal portion 131c may be pushed as deep as possible into the front open portion O or the rear open portion of the cell cover 120. A surface of the bus bar terminal portion 131c may face upward, and the bus bar terminal portion 131c may be exposed above the cut portion 124 of the cell cover 120. Accordingly, as shown in FIG. 2, from among the bus bar terminal portions 131c located at both ends of the cell cover 120 in the longitudinal direction, one bus bar terminal portion 131c may function as a positive electrode terminal and the other may function as a negative electrode terminal. That is, in a state where the terminal extender 140 described below is not mounted, the two bus bar terminal portions 131c may be used as a positive electrode terminal and a negative electrode terminal of the cell assembly 100.

It may be advantageous when the positive and negative electrode terminals of the cell assembly 100 are located far apart as above, or in some cases, it may be disadvantageous. In other words, when the positive and negative electrode terminals of the cell assembly 100 are always provided at specific positions and may not be changed, connection with other devices may be very difficult or electrical wiring may be very complicated.

Accordingly, the cell assembly 100 according to the present disclosure further includes the terminal extender 140 that may change positions or directions of the positive and negative electrode terminals.

Referring back to FIGS. 1 and 2, the terminal extender 140 may include a first terminal extender 140A and a second terminal extender 140B, may be electrically connected to the terminal bus bar 131 of the bus bar assembly 130, and may be detachably provided on an outer side of the cell cover 120. In particular, the terminal extender 140 may be detachably provided on the upper cover portion 121 of the cell cover 120. The first terminal extender 140A and the second terminal extender 140B may have substantially the same configuration. That is, the first terminal extender 140A is connected to the first bus bar assembly 130A and the second terminal extender 140B is connected to the second bus bar assembly 130B, and there is no substantial difference in actual configuration.

The first terminal extender 140A and the second terminal extender 140B may be individually attached to and detached from the cell cover 120. Accordingly, according to the present disclosure, according to where to locate the positive electrode terminal and the negative electrode terminal of the cell assembly 100, the first terminal extender 140A and the second terminal extender 140B may not be used, both the first terminal extender 140A and the second terminal extender 140B may be used, or one of the two may not be used.

The terminal extender 140 according to an embodiment of the present disclosure will be described in detail with reference to FIGS. 7 to 10 together with FIGS. 1 and 2.

The terminal extender 140 may include a current conducting member 142 forming a current path, and an extension housing 141 functioning as an insulating material covering the current conducting member 142 and easily attached to and detached from the cell cover 120.

The current conducting member 142 and the extension housing 141 may be integrally manufactured by using insert injection molding. Alternatively, the current conducting member 142 and the extension housing 141 may be individually manufactured and then may be assembled.

The current conducting member 142 may be formed of an electrically conductive material. For example, the current conducting member 142 may be formed of a metal such as copper, nickel, or aluminum. Although the current conducting member 142 is implemented in a metal bar shape in the present embodiment, unlike the present embodiment, the current conducting member 142 may be provided in a metal wire shape.

The current conducting member 142 may include a terminal connection portion 142a provided at one end and an extension terminal portion 142b provided at the other end as shown in FIG. 7, and may be provided in a substantially metal bar shape.

The terminal connection portion 142a may be in face-to-face contact with the bus bar terminal portion 131c of the bus bar assembly 130. Also, as shown in FIG. 2, in order to compensate for a height difference between the upper cover portion 121 of the cell cover 120 and the bus bar terminal portion 131c and easily fasten a fastening member B such as a bolt, the terminal connection portion 142a may be thicker than other portions and may have a fastening hole passing therethrough.

The extension terminal portion 142b functioning as a new terminal of the cell assembly 100 on which the terminal extender 140 is mounted may be provided at a position spaced apart from the terminal connection portion 142a by a certain distance. For example, the current conducting member 142 of the present embodiment may be formed so that the extension terminal portion 142b is located at a central portion of the cell cover 120. Also, the extension terminal portion 142b may be exposed to the outside of the extension housing 141 to be connected to another device, and may be fastened with a fastening member B such as a bolt.

The extension housing 141 may be formed of an electrically insulating material, and may be detachably provided on an outer surface of the cell cover 120. The extension housing 141 may be provided to surround the circumference of the current conducting member 142 except for the terminal connection portion 142a and the extension terminal portion 142b to prevent the cell cover 120 and the current conducting member 142 from contacting each other. Accordingly, the current conducting member 142 may be insulated from the cell cover 120 by the extension housing 141.

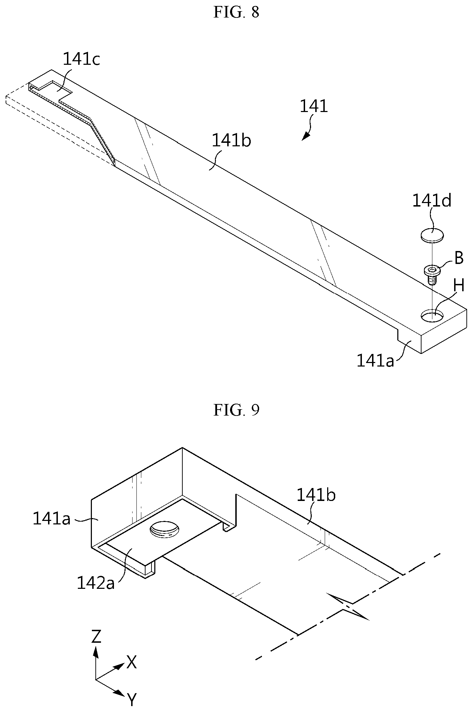

Referring to FIG. 8, the extension housing 141 includes a mounting portion 141a through which one surface of the terminal connection portion 142a facing the bus bar terminal portion 131c is exposed to the outside, an extension portion 141b extending by a pre-determined length from the mounting portion 141a and formed in a hollow structure, and a terminal exposure portion 141c through which the extension terminal portion 142b is exposed to the outside.

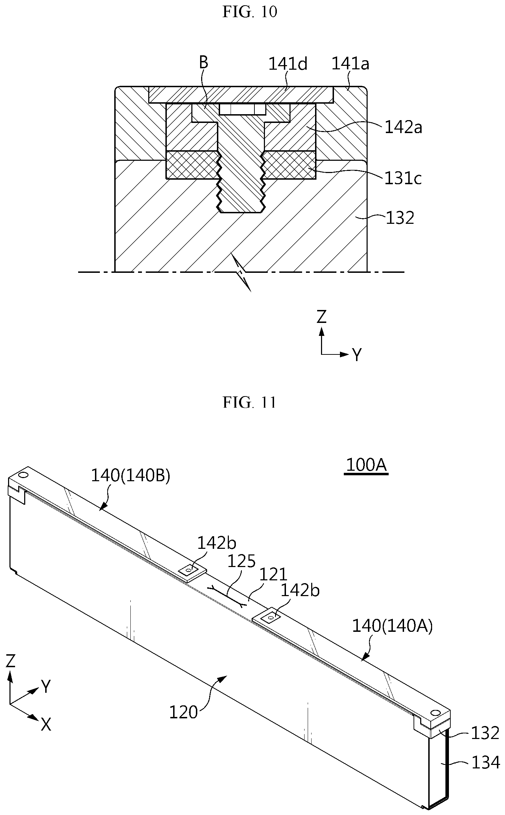

As shown in FIG. 9, the mounting portion 141a may be formed to cover the terminal connection portion 142a and expose a bottom surface of the terminal connection portion 142a. In particular, a lower end of the mounting portion 141a may extend downward beyond the bottom surface of the terminal connection portion 142a. For example, as shown in FIGS. 9 and 10, when the terminal connection portion 142a contacts a top surface of the bus bar terminal portion 131c, the mounting portion 141a may cover up to the bus bar terminal portion 131c. According to this configuration, when the terminal extender 140 is provided on the cell cover 120, the bus bar terminal portion 131c of the bus bar assembly 130 may be completely shielded.

The mounting portion 141a includes a hole H in a top surface, as shown in FIG. 8. The hole H may be aligned with a fastening hole formed in the terminal connection portion 142a and a fastening hole formed in the bus bar terminal portion 131c.

According to this configuration, the terminal extender 140 may be seated on the cell cover 120, the fastening member B such as a bolt may be inserted and fastened into the fastening holes of the terminal connection portion 142a and the bus bar terminal portion 131 c through the hole of the mounting portion 141a, and the mounting portion 141a, the terminal connection portion 142a, and the terminal bus bar 131 may be integrally fixed as shown in FIG. 10. A hole cover 141d may be used to prevent a head of the bolt from being exposed to the outside.

The extension portion 141b covers portions other than the terminal connection portion 142a and the extension terminal portion 142b, and has a length corresponding to a distance between the terminal connection portion 142a and the extension terminal portion 142b.

The terminal exposure portion 141c may be configured to expose the extension terminal portion 142b in one direction. For example, referring to FIG. 7, the terminal exposure portion 141c may be formed by cutting and opening one surface of the extension housing 141 by the area of the extension terminal portion 142b. The extension terminal portion 142b may protrude to the outside of the extension housing 141 through the terminal exposure portion 141c. The extension terminal portion 142b exposed to the outside of the extension housing 141 may function as a positive electrode terminal or a negative electrode terminal of the cell assembly 100.

A total width of the terminal extender 140 configured as described above may be less than a width of the upper cover portion 121 of the cell cover 120. In this case, when a plurality of cell assemblies 100 are stacked in one direction, the terminal extenders 140 may not be interfered with each other, and thus, the plurality of cell assemblies 100 may be in close contact with each other. Also, the terminal extender 140 may have a length less than a length of the upper cover portion 121, and a length of the terminal extender 140 does not need to be limited to a specific length. For example, in the present embodiment, each of the first terminal extender 140A and the second terminal extender 140B extends to an upper central portion of the cell cover 120. Accordingly, in the cell assembly 100 according to an embodiment of the present disclosure, a positive electrode terminal and a negative electrode terminal are located at the upper central portion of the cell cover 120. However, unlike the present embodiment, for example, a length of the first terminal extender 140A may be longer and a length of the second terminal extender 140B may be shorter, so that positions of a positive electrode terminal and a negative electrode terminal may be different from those in the present embodiment.

According to the configuration of the terminal extender 140 according to an embodiment of the present disclosure as described above, a position of a positive electrode terminal and/or a negative electrode terminal of the cell assembly 100 may be easily changed according to a situation.

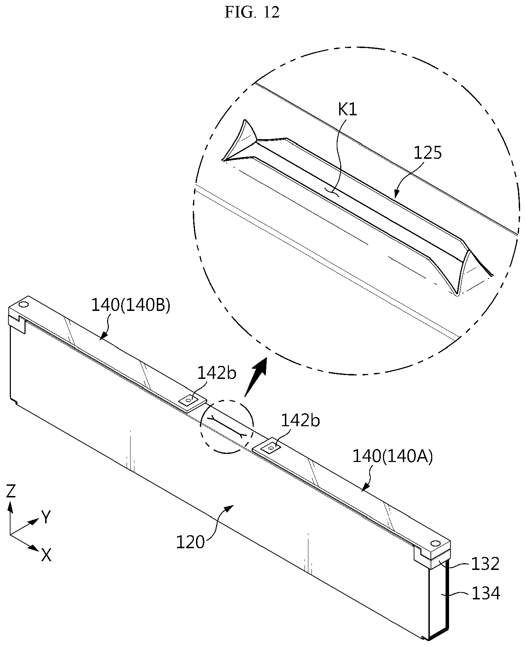

The cell assembly 100 according to another embodiment of the present disclosure will be described with reference to FIGS. 11 and 12.

FIG. 11 is a schematic perspective view illustrating the cell assembly 100 according to another embodiment of the present disclosure. FIG. 12 is a view illustrating an example where a venting portion 125 in the cell assembly 100 of FIG. 11 is opened.

The same members as those in the above embodiment are denoted by the same reference numerals, a repeated description of the same members will be omitted, and a difference from the above embodiment will be mainly described.

The cell assembly 100 according to another embodiment of the present disclosure is substantially the same as the cell assembly 100 described above except for a configuration of the cell cover 120.

Referring to FIG. 11, the cell assembly 100 according to another embodiment of the present disclosure includes the venting portion 125 provided in the upper cover portion 121 of the cell cover 120. The venting portion 125 may be located in an area where the first terminal extender 140A and the second terminal extender 140B are not mounted and may be opened by pressure. In particular, when gas or the like is ejected from the pouch-type battery cell 110 and internal pressure of the cell cover 120 rapidly increases, the venting portion 125 may be opened by the internal pressure.

In detail, for example, the venting portion 125 may be provided by linearly cutting a portion of the upper cover portion 121 of the cell cover 120 with a sharp object such as a knife. Alternatively, the venting portion 125 may be provided by notching the upper cover portion 121.

The venting portion 125 may be formed in a substantially straight line shape along the longitudinal direction of the cell cover 120, and an end of the venting portion 125 in an extension direction may branch.

For example, referring to FIG. 11, the venting portion 125 may include a center cut line extending long along a front-back direction (X direction) that is the longitudinal direction of the cell cover 120 and four branch cut lines branching from both ends of the center cut line. In more detail, two front cut lines may branch a front end of the center cut line at a certain angle with respect to the center cut line. Also, two rear cut lines may branch from a rear end of the center cut line at a certain angle with respect to the center cut line. In particular, the front cut lines or the rear cut lines may be formed to have a right angle or an obtuse angle with respect to the center cut line.

According to the configuration of the venting portion 125, when gas or flame is ejected from the pouch-type battery cell 110 accommodated in the cell cover 120, the venting portion 125 of the cell cover 120 may be opened as indicated by 'K1' in FIG. 12. Accordingly, the gas or flame may be discharged upward from the inside of the cell cover 120, thereby preventing explosion of the cell assembly 100.

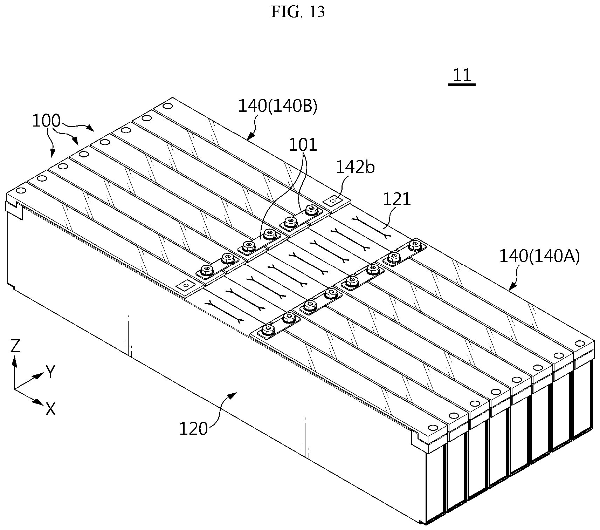

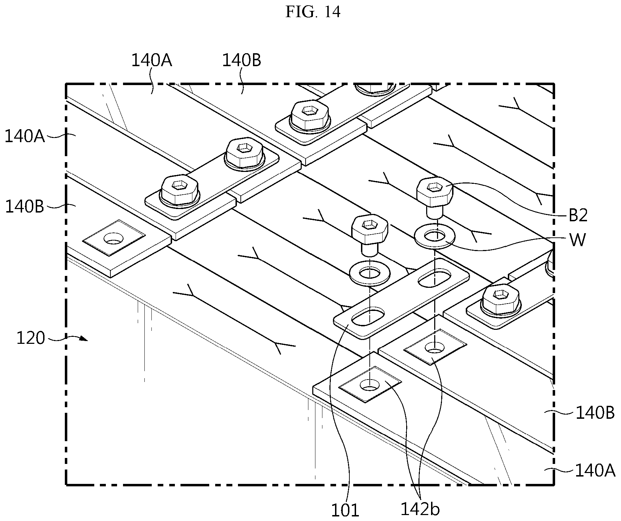

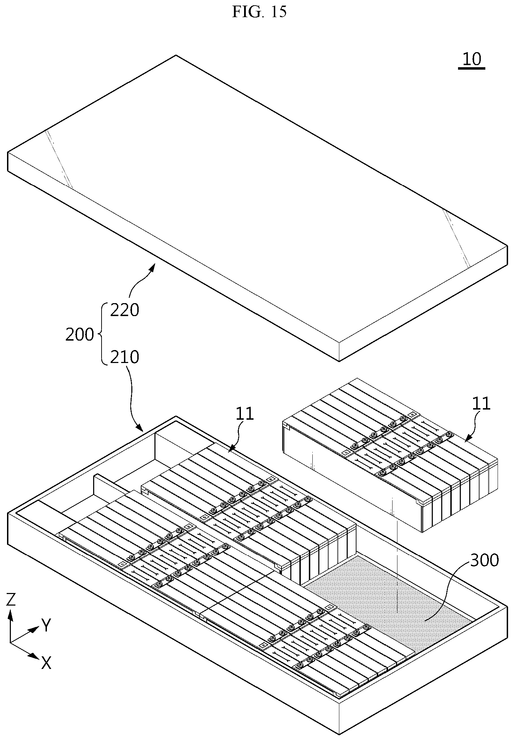

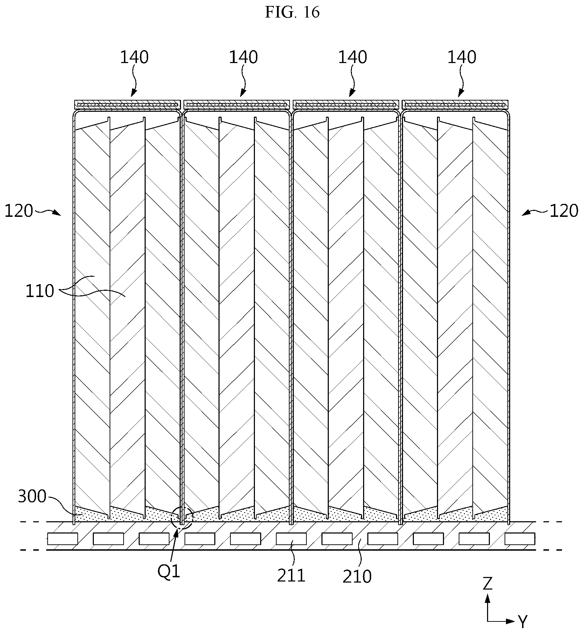

FIG. 13 is a view schematically illustrating a cell assembly group 11 according to an embodiment of the present disclosure. FIG. 14 is a partial enlarged view of FIG. 13. FIG. 15 is a view schematically illustrating a configuration of the battery pack 10 according to an embodiment of the present disclosure. FIG. 16 is a partial cross-sectional view illustrating the battery pack 10 according to an embodiment of the present disclosure.

The battery pack 10 according to an embodiment of the present disclosure includes the cell assembly group 11 in which the cell assemblies 100 are stacked in one direction and the pack case 200 in which at least one cell assembly group 11 is accommodated.

As shown in FIG. 13, the cell assemblies 100 may be stacked in one direction (Y direction) so that side portions face each other. As shown in FIG. 14, the cell assemblies 100 may be electrically connected by an inter-bus bar 101. For example, one side of the inter-bus bar 101 is coupled to a positive electrode terminal of one cell assembly 100, and the other side of the inter-bus bar 101 is coupled to a negative electrode terminal of another cell assembly 100. That is, as shown in FIG. 14, the extension terminal portion 142b of one cell assembly 100 and the extension terminal portion 142b of another cell assembly 100 are electrically connected to each other by the inter-bus bar 101. In this case, by bolts B2 and washers W, one side of the inter-bus bar 101 may be fixedly coupled to the extension terminal portion 142b functioning as a positive electrode terminal and the other side of the inter-bus bar 101 may be fixedly coupled to the extension terminal portion 142b functioning as a negative electrode terminal.

In this way, the cell assemblies 100 constituting the cell assembly group 11 may be electrically connected to each other.

The pack case 200 includes a pack tray 210 and a pack cover 220, as shown in FIG. 15. In a more specific example, the pack tray 210 may be formed in a box shape with an open top to accommodate a plurality of cell assembly groups 11 in an inner space. The pack cover 220 may be formed as a cover covering the open top of the pack tray 210. In this case, the pack cover 220 may be formed in a box shape with an open bottom. The pack case 200 may be formed of a plastic or metal material. Any of various casing materials for the battery pack 10 known at the time of filing the present application may be used as a material of the pack case 200.

In particular, as shown in FIG. 15, a thermally conductive adhesive 300 may be provided on a bottom plate of the pack tray 210 on which the cell assembly group 11 is seated. Accordingly, the cell assembly group 11 may be adhered and fixed to the pack tray 210.

Also, the pack tray 210 may include a cooling channel 211 in which a cooling medium may flow, as shown in FIG. 16. That is, because the cooling channel 211 is provided in the bottom plate of the pack tray 210, the pack tray 210 itself may function as a heat sink. The term "heat sink" refers to an object that absorbs and dissipates heat from other objects through direct or indirect thermal contact.

In particular, according to the present disclosure, as described above, the cell cover 120 is formed to expose the lower edge portion E2 of the pouch-type battery cell 110. Accordingly, when the cell assembly group 11 is seated on the bottom plate of the pack tray 210, the lower edge portion E2 of the pouch-type battery cell 110 directly faces the bottom plate of the pack tray 210. In this case, because the thermally conductive adhesive 300 is pre-applied to the bottom plate of the pack tray 210, there may be no empty space between the lower edge portion E2 of the pouch-type battery cell 110 and the bottom plate of the pack tray 210. Hence, the cooling performance of the battery pack 10 may be more effectively ensured. That is, because heat emitted from each pouch-type battery cell 110 is more effectively transferred to the pack case 200, cooling performance may be improved. In this case, because a separate cooling structure does not need to be provided between the pouch-type battery cell 110 and the pack case 200, efficient cooling performance may be achieved.

Also, the pack tray 210 may include a fixing groove into which a lower end of the cell cover 120 may be inserted and fixed. That is, lower ends of the first side cover portion 122 and the second side cover portion 123 of the cell cover 120 may be inserted into the bottom plate of the pack tray 210. For example, as indicated by 'Q I' in FIG. 16, a lower end of each cell cover 120 may be partially inserted and fixed into the bottom plate of the pack tray 210. Accordingly, an erected state of the cell covers 120 in the pack tray 210 may be more stable.

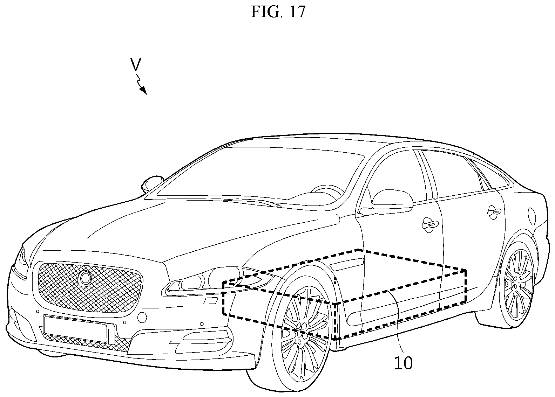

The battery pack 10 according to the present disclosure may be used as an energy source for a vehicle. That is, a vehicle V according to the present disclosure may include the battery pack 10 according to the present disclosure, as shown in FIG. 17. The vehicle according to the present disclosure may include a certain vehicle using electricity as a driving source such as an electric vehicle or a hybrid vehicle. Also, the vehicle according to the present disclosure may include various other elements included in a vehicle, for example, a vehicle body or a motor, in addition to the battery pack 10 according to the present disclosure.

It will be understood by one of ordinary skill in the art that when terms indicating directions such as upper, lower, left, right, front, and rear are used, these terms are only for convenience of explanation and may vary according to a position of a target object, a position of an observer, etc.

While one or more embodiments of the present disclosure have been described with reference to the embodiments and figures, the present disclosure is not limited thereto, and it will be understood by one of ordinary skill in the art that various changes in form and details may be made therein without departing from the scope of the present disclosure as defined by the following claims.

## Claims

1. A cell assembly comprising:
one pouch-type battery cell or two or more pouch-type battery cells which are stacked;
a cell cover partially surrounding an outer surface of the pouch-type battery cell;
a bus bar assembly comprising a terminal bus bar electrically connected to an electrode lead of each of the pouch-type battery cell; and
a terminal extender electrically connected to the terminal bus bar, extending to a position spaced apart from the terminal bus bar by a certain distance, and detachably provided on an outer surface of the cell cover.

2. The cell assembly according to claim 1, wherein the terminal extender comprises:
a current conducting member formed of an electrically conductive material, and comprising a terminal connection portion contacting the terminal bus bar and an extension terminal portion provided at a position spaced apart from the terminal connection portion by a certain distance; and
an extension housing formed of an electrically insulating material, surrounding the current conducting member so that the current conducting member does not contact the cell cover, and detachably provided on the outer surface of the cell cover.

3. The cell assembly according to claim 2, wherein the extension housing comprises:
a mounting portion through which one surface of the terminal connection portion facing the terminal bus bar is exposed to outside;
an extension portion having a hollow structure and extending from the mounting portion by a pre-determined length; and
a terminal exposure portion through which the extension terminal portion is exposed to outside.

4. The cell assembly according to claim 3, wherein the mounting portion, the terminal connection portion, and the terminal bus bar are integrally fixed to each other by a fastening member.

5. The cell assembly according to claim 1, wherein the bus bar assembly comprises a first bus bar assembly and a second bus bar assembly respectively located at one end and the other end of the cell cover along a longitudinal direction, and
the terminal extender comprises a first terminal extender connected to the first bus bar assembly and a second terminal extender connected to the second bus bar assembly.

6. The cell assembly according to claim 5, wherein each of the first terminal extender and the second terminal extender extends to an upper central portion of the cell cover.

7. The cell assembly according to claim 1, wherein the cell cover is configured to surround the pouch-type battery cell so that an upper edge portion or a lower edge portion of the surrounded pouch-type battery cell is exposed.

8. The cell assembly according to claim 1, wherein the cell cover comprises:
an upper cover portion covering an upper edge portion of the pouch-type battery cell;
a first side cover portion extending downward from one edge of the upper cover portion along a width direction and covering one side surface of the pouch-type battery cell; and
a second side cover portion extending downward from the other edge of the upper cover portion along the width direction and covering the other side surface of the pouch-type battery cell.

9. The cell assembly according to claim 8, wherein the bus bar assembly comprises a first bus bar assembly and a second bus bar assembly respectively located at one end and the other end of the cell cover in a longitudinal direction, and
the terminal extender is detachably provided on the upper cover portion, and comprises a first terminal extender connected to the first bus bar assembly and a second terminal extender connected to the second bus bar assembly,
wherein the upper cover portion comprises a venting portion located in an area where the first terminal extender and the second terminal extender are not mounted and opened by pressure.

10. The cell assembly according to claim 9, wherein the venting portion is provided by linearly cutting or notching the upper cover portion.

11. A battery pack comprising:
a cell assembly group in which cell assemblies according to any one of claims 1 to 10 are stacked in one direction; and
a pack case comprising a pack tray on which the cell assembly group is seated and a pack cover covering the cell assembly group.

12. The battery pack according to claim 11, wherein the cell assembly group is adhered and fixed to the pack tray.

13. The battery pack according to claim 11, wherein the pack tray comprises a cooling channel in which a cooling medium may flow.

14. The battery pack according to claim 11, wherein the pack tray comprises a fixing groove into which a lower end of the cell cover is inserted and fixed.

15. A vehicle comprising the battery pack according to claim 11.
